# EUROPEAN PATENT APPLICATION

(11) **EP 3 550 822 A1**
(43) Date of publication of application: **09.10.2019**
(21) Application number: 17884214.2
(22) Date of filing: 11.01.2017
(51) Int. Cl.: H04N 5/232

(54) **CAMERA CONTROL METHOD AND TERMINAL**

(30) Priority: 24.12.2016 CN 201611210208
(71) Applicant: Huawei Technologies Co., Ltd., Longgang District Shenzhen, Guangdong 518129 (CN)
(72) Inventor: JIN, Linfang, Shenzhen Guangdong 518129 (CN); LI, Siyang, Shenzhen Guangdong 518129 (CN); LIU, Jiaju, Shenzhen Guangdong 518129 (CN); KANG, Nanbo, Shenzhen Guangdong 518129 (CN)
(74) Representative: Epping - Hermann - Fischer
(86) International application number: PCT/CN2017/070928
(87) International publication number: WO 2018/113055

(57) **Abstract**

A camera control method and a terminal are disclosed. The method includes: starting, by a terminal, a first camera and a second camera, where the first camera and the second camera are located on a same side of the terminal, and the first camera operates in a first operating state; and when an operating parameter of the terminal meets a preset condition, switching the first camera from the first operating state to a second operating state, where the second operating state is a low power consumption state or a closed state.

## Description

This application claims priority to Chinese Patent Application No. 201611210208.1, filed with Chinese Patent Office on December 24, 2016 and entitled "CAMERA CONTROL METHOD AND TERMINAL", which is incorporated herein by reference in its entirety.

### TECHNICAL FIELD

This application relates to the field of terminal devices, and in particular, to a camera control method and a terminal.

### BACKGROUND

An intelligent terminal plays an extremely important role in people's daily life because of diverse functions, a fashionable appearance, and a portability feature. A photographing function is widely favored by consumers, and therefore, almost all mainstream terminal vendors vigorously promote the photographing function as a main selling point. However, when taking a picture, the terminal needs to invoke a plurality of physical chips for imaging. A higher imaging quality indicates higher power consumption. Therefore, when the terminal is taking a picture, power consumption of the terminal may be extremely high, which leads to overtemperature of the terminal. Currently, many terminal vendors have successively published terminals equipped with dual cameras (camera). When a terminal equipped with dual cameras is taking a picture, power consumption further increases. In addition, when a battery level of the terminal is low and the dual cameras operate, the terminal usually shuts down automatically because of a low temperature and a low voltage when taking a picture.

An existing overheat protection technical solution mainly includes: when a terminal is taking a picture, after it is detected that a temperature of the terminal exceeds a preset temperature threshold, a camera image frame rate is reduced, so as to reduce a load, power consumption, the temperature of the terminal.

In the current dual-camera scenario, when the existing overheat protection technical solution is used, only part of power consumption can be reduced by reducing the frame rate, and there is no significant improvement on an overheat problem in the dual-camera scenario. In addition, a preview display refresh rate is significantly reduced after the frame rate is reduced. Therefore, when a moving picture is photographed, quick change of objects in the picture may affect intuitive experience brought by the moving picture, and consequently the picture may intermittently stop. In addition, a high current may be generated when the dual cameras operate, and consequently the terminal may automatically shut down because of a low temperature and a low voltage of a chip in the terminal. There is no proper solution to this problem.

Therefore, a camera control method needs to be provided to reduce an impact on performance of the terminal imposed by the power consumption generated when a plurality of cameras operate.

### SUMMARY

An objective of implementations of embodiments of this application is to provide a camera control method and a terminal, so as to reduce power consumption generated by cameras in a multi-camera scenario.

An embodiment of this application provides a camera control method, including:
starting, by a terminal, a first camera and a second camera, where the first camera and the second camera are located on a same side of the terminal, and the first camera operates in a first operating state; and
when an operating parameter of the terminal meets a preset condition, switching the first camera from the first operating state to a second operating state, where the second operating state is a low power consumption state or a closed state.

According to the foregoing method, when determining that the operating parameter meets the preset condition, the terminal switches the first camera from the first operating state to the second operating state. The second operating state is the low power consumption state or the closed state, and therefore, total power consumption of the first camera and the second camera may be reduced, so as to lower a temperature of a mobile phone, thereby achieving the objective of reducing the power consumption generated by the camera in the multi-camera scenario.

Optionally, the operating parameter includes one or more of the following:
operating duration after the first camera is started;
a battery voltage of the terminal;
a photographing parameter of the first camera; or
a temperature of a preset area in the terminal; and
the preset condition includes one or more of the following:
   the operating duration after the first camera is started is greater than first preset duration;
   the battery voltage of the terminal is lower than a preset voltage;
   the photographing parameter of the first camera is higher than a first preset value, or the photographing parameter of the first camera is lower than a second preset value;
   the temperature of the preset area in the terminal is higher than a first preset temperature; or
   the temperature of the preset area in the terminal is lower than a second preset temperature; and the second preset temperature is lower than the first preset temperature.

Optionally, before the switching the first camera from the first operating state to a second operating state, the method further includes:
determining, by the terminal, that the first camera is allowed to operate in the second operating state.

Optionally, after the terminal changes a current operating state of the first camera from the first operating state to the second operating state, the method further includes:
detecting, by the terminal, whether there is an event triggering the first camera to operate in the first operating state; and
when the event triggering the first camera to operate in the first operating state is detected, switching the first camera from the operating state to the first operating state.

Optionally, the detecting, by the terminal, whether there is an event triggering the first camera to operate in the first operating state includes:
detecting, by the terminal, whether a running mode of a camera application program is switched from a second running mode to a first running mode, where the first running mode is a running mode in which the first camera is not allowed to operate in the second operating state, and the second running mode is a running mode in which the first camera is allowed to operate in the second operating state.

Optionally, the detecting, by the terminal, whether there is an event triggering the first camera to operate in the first operating state includes:
detecting, by the terminal, whether a user triggers recording of an image.

An embodiment of this application provides a terminal, including:
an operating parameter determining unit, configured to determine whether an operating parameter of the terminal meets a preset condition; and
a camera control unit, configured to: start a first camera and a second camera, where the first camera and the second camera are located on a same side of the terminal, and the first camera operates in a first operating state; and when the operating parameter determining unit determines that the operating parameter of the terminal meets the preset condition, switch the first camera from the first operating state to a second operating state, where the second operating state is a low power consumption state or a closed state.

Optionally, the operating parameter includes one or more of the following:
operating duration after the first camera is started;
a battery voltage of the terminal;
a photographing parameter of the first camera; or
a temperature of a preset area in the terminal; and
the preset condition includes one or more of the following:
   the operating duration after the first camera is started is greater than first preset duration;
   the battery voltage of the terminal is lower than a preset voltage;
   the photographing parameter of the first camera is higher than a first preset value, or the photographing parameter of the first camera is lower than a second preset value;
   the temperature of the preset area in the terminal is higher than a first preset temperature; or
   the temperature of the preset area in the terminal is lower than a second preset temperature; and the second preset temperature is lower than the first preset temperature.

Optionally, before switching the first camera from the first operating state to the second operating state, the camera control unit is further configured to: determine that the first camera is allowed to operate in the second operating state; and when the first camera is allowed to operate in the second operating state, switch the first camera from the first operating state to the second operating state.

Optionally, after switching the first camera from the first operating state to the second operating state, the camera control unit is further configured to:
detect whether there is an event triggering the first camera to operate in the first operating state; and
when the event triggering the first camera to operate in the first operating state is detected, switch the first camera from the operating state to the first operating state.

Optionally, the detecting whether there is an event triggering the first camera to operate in the first operating state is:
detecting whether a running mode of a camera application program is switched from a second running mode to a first running mode, where the first running mode is a running mode in which the first camera is not allowed to operate in the second operating state, and the second running mode is a running mode in which the first camera is allowed to operate in the second operating state.

Optionally, the detecting whether there is an event triggering the first camera to operate in the first operating state is:
detecting, by the terminal, whether a user triggers recording of an image.

An embodiment of this application provides a terminal, including:
a first camera and a second camera;
a memory, configured to store a program instruction; and
a processor, configured to execute the program instruction to perform the following steps:
   starting the first camera and the second camera, where the first camera and the second camera are located on a same side of the terminal, and the first camera operates in a first operating state; and
   when an operating parameter of the terminal meets a preset condition, switching the first camera from the first operating state to a second operating state, where the second operating state is a low power consumption state or a closed state.
Optionally, the operating parameter includes one or more of the following:
operating duration after the first camera is started;
a battery voltage of the terminal;
a photographing parameter of the first camera; or
a temperature of a preset area in the terminal; and
the preset condition includes one or more of the following:
   the operating duration after the first camera is started is greater than first preset duration;
   the battery voltage of the terminal is lower than a preset voltage;
   the photographing parameter of the first camera is higher than a first preset value, or the photographing parameter of the first camera is lower than a second preset value;
   the temperature of the preset area in the terminal is higher than a first preset temperature; or
   the temperature of the preset area in the terminal is lower than a second preset temperature; and the second preset temperature is lower than the first preset temperature.

Optionally, before the processor switches the first camera from the first operating state to the second operating state, the processor is further configured to:
determine that the first camera is allowed to operate in the second operating state.

Optionally, after the processor changes a current operating state of the first camera from the first operating state to the second operating state, the processor is further configured to: detect whether there is an event triggering the first camera to operate in the first operating state; and
when the event triggering the first camera to operate in the first operating state is detected, switch the first camera from the operating state to the first operating state.

Optionally, that the processor detects whether there is the event triggering the first camera to operate in the first operating state includes:
detecting whether a running mode of a camera application program is switched from a second running mode to a first running mode, where the first running mode is a running mode corresponding to the first camera operating in the first operating state, and the second running mode is a running mode in which the first camera is allowed to operate in the second operating state.

Optionally, the detecting, by the terminal, whether there is an event triggering the first camera to operate in the first operating state includes:
detecting whether a user triggers recording of an image.

An embodiment of this application provides a computer readable storage medium. The computer readable storage medium stores an instruction, and when the instruction runs on the computer, the computer performs the methods according to the foregoing aspects.

An embodiment of this application provides a computer program product including an instruction. When the computer program product runs on the computer, the computer performs the methods according to the foregoing aspects.

### BRIEF DESCRIPTION OF DRAWINGS

FIG. 1 is a schematic flowchart of a camera control method according to an embodiment of this application;
FIG. 2 is a schematic diagram of locations of a first camera and a second camera;
FIG. 3 is a schematic diagram of area division according to an embodiment of this application;
FIG. 4 is a schematic flowchart of a camera control method according to an embodiment of this application;
FIG. 5 is a schematic flowchart of a camera control method according to an embodiment of this application;

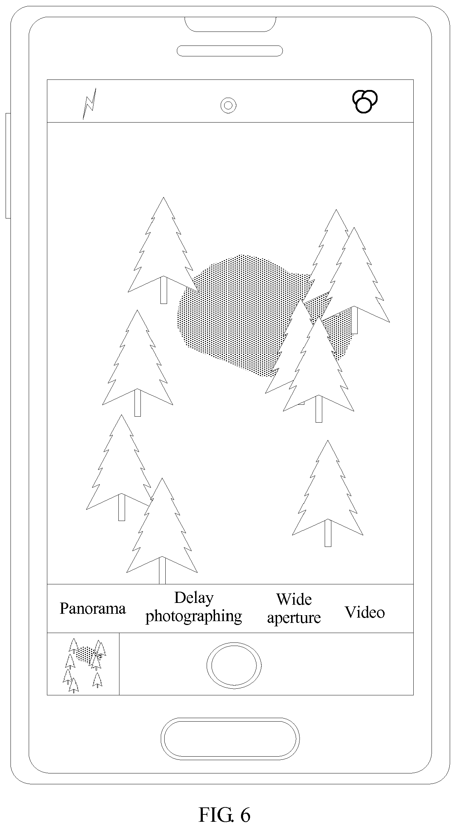

FIG. 6 is a schematic diagram of a camera application program according to an embodiment of this application;
FIG. 7 is a schematic structural diagram of a terminal according to an embodiment of this application;
FIG. 8 is a schematic structural diagram of a terminal according to an embodiment of this application;
FIG. 9 is a schematic flowchart of a camera control method according to an embodiment of this application; and
FIG. 10 is a schematic flowchart of a camera control method according to an embodiment of this application.

### DESCRIPTION OF EMBODIMENTS

The following further describes the embodiments of this application in detail with reference to the accompanying drawings.

The terms used in the embodiments of this application are merely for the purpose of illustrating specific embodiments, and are not intended to limit this application. It should also be understood that the term "and/or" used herein indicates and includes any or all possible combinations of one or more associated listed items. In addition, the character "/" in this specification generally indicates an "or" relationship between the associated objects.

It should be understood that although terms "first", "second", "third", and the like may be used in the embodiments of this application to describe various messages, requests, and terminals, the messages, requests, and terminals are not limited by the terms. These terms are only used to differentiate the messages, requests, and terminals. For example, without departing from the scope of the embodiments of this application, a first terminal may also be referred to as a second terminal, and similarly, the second terminal may also be referred to as the first terminal.

Depending on the context, for example, words "if' or "provided that" used herein may be explained as "while" or "when" or "in response to determining" or "in response to detection". Similarly, depending on the context, phrases "if determining" or "if detecting (a stated condition or event)" may be explained as "when determining" or "in response to determining" or "when detecting (the stated condition or event)" or "in response to detecting (the stated condition or event)".

In the embodiments of this application, a terminal, also referred to as user equipment (User Equipment, UE), is a device that provides voice and/or data connectivity to a user, for example, a handheld device with a wireless connection function, or a vehicle-mounted device. For example, common terminals include: a mobile phone, a tablet computer, a notebook computer, a palmtop computer, a mobile Internet device (mobile Internet device, MID), and a wearable device such as a smartwatch, a smart band, or a pedometer.

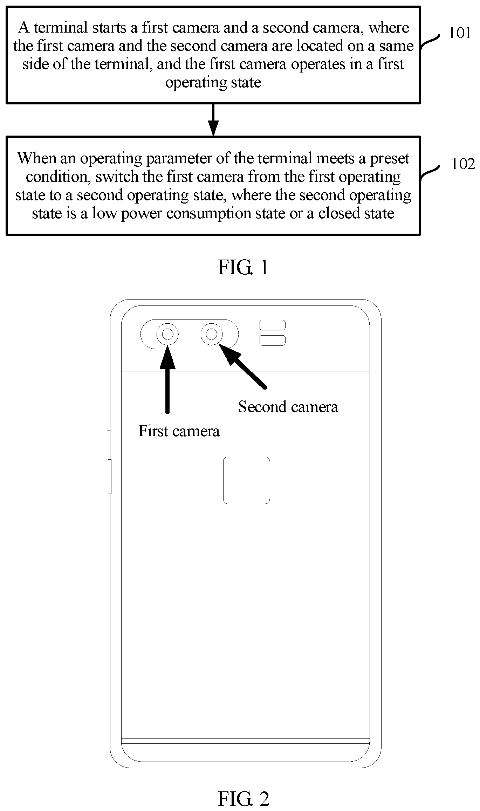

With reference to the foregoing description, as shown in FIG. 1, FIG. 1 is a schematic flowchart of a camera control method according to an embodiment of this application.

Referring to FIG. 1, the method includes the following steps.

Step 101: A terminal starts a first camera and a second camera, where the first camera and the second camera are located on a same side of the terminal, and the first camera operates in a first operating state.

It should be noted that, in this embodiment of this application, the terminal may include at least two cameras. When the terminal includes at least two cameras, the first camera and the second camera may be any two of the at least two cameras, and each of the at least two cameras is applicable to the camera control method provided in this embodiment of this application. The following uses only the first camera and the second camera as an example for description, and another situation is not described in detail.

The first camera operates in the first operating state. The first operating state may be an operating state in which the first camera can implement image acquisition, and may be referred to as a normal operating state.

Step 102: When an operating parameter of the terminal meets a preset condition, switch the first camera from the first operating state to a second operating state, where the second operating state is a low power consumption state or a closed state.

Power consumption of the first camera in the second operating state is less than power consumption of the first camera in the first operating state.

In step 101, the first camera and the second camera may be cameras with a same configuration, or may be cameras with different configurations. For example, the first camera may include a monochrome sensor recording brightness or dimness to collect a monochrome image; and the second camera may include a color sensor to collect a color image. The terminal may perform synthesis processing on an image signal collected by the first camera and an image signal collected by the second camera, to implement functions such as optical zoom, dim light compensation, 3D photographing, and 3D modeling. With reference to the foregoing description, when the first camera collects a monochrome image, and the second camera collects a color image, the terminal may synthesize the monochrome image and the color image to finally generate a high-definition image with real color reproduction.

The first camera and the second camera are located on the same side of the terminal, and a distance between the first camera and the second camera is a preset distance. FIG. 2 is a schematic diagram of locations of the first camera and the second camera.

In step 102, a camera application program that is used to control the first camera and the second camera to operate may exist in the terminal, and a user controls the first camera and the second camera to collect an image by using the camera application program.

In this embodiment of this application, the camera application program may be a program that is in the terminal and that controls the first camera and the second camera to collect an image, may be a delivery-attached program of the terminal, or may be a downloaded and installed program.

The camera application program may have a plurality of running modes such as a wide aperture mode, a panorama mode, a video photographing mode, a delay photographing mode, and a picture mode. When the camera application program is set to different running modes, power consumption required by each of the first camera and the second camera to collect an image is different, and a quantity of cameras required is different. For example, in the wide aperture mode, the first camera and the second camera need to simultaneously collect an image in the camera application program; and for example, in the picture mode, the camera application program may control only the second camera to collect an image, and in this case, the first camera is in the low power consumption state or the closed state.

The running mode of the camera application program may include a first running mode and a second running mode. The first running mode is a running mode in which the first camera needs to operate in the first operating state such as the wide aperture mode; and the second running mode is a running mode in which the first camera is allowed to operate in the second operating state such as the picture mode or the video photographing mode. Different terminals or camera application programs may set different first running modes and second running modes, for example, the picture mode is the first running mode. This is not limited in this embodiment of the present invention.

The first operating state may be an operating state of the first camera when the camera application program in the terminal operates in any running mode described above. Certainly, the first operating state may alternatively be another operating state, and examples are not given one by one herein.

In this embodiment of this application, the second operating state may be an operating state such as the low power consumption mode or the closed state. When operating in the low power consumption mode, the first camera may be in a sleep state and have extremely low power consumption. For example, when the camera application program is in the picture mode, the first camera is in the first operating state, an operating current is 100 mA, and an operating current generated when the first camera operates in the low power consumption mode may be 4 mA. When the first camera operates in the closed state, power consumption may be 0 or infinitely close to 0. The first camera may not collect an image in the second operating state.

In this embodiment of this application, the camera may include a lens, a motor system, an imaging chip, and the like. The motor system and the imaging chip are main sources of the power consumption of the camera. For the first camera, that the first camera operates in the low power consumption mode may be that one or more of a lens of the first camera, a motor system of the first camera, or an imaging chip of the first camera is/are in the low power consumption mode such as the sleep state; and correspondingly, that the first camera operates in the closed state may be that one or more of the lens of the first camera, the motor system of the first camera, or the imaging chip of the first camera is/are in the closed state.

In this embodiment of this application, the operating parameter of the terminal may include one or more of the following: operating duration when the first camera of the terminal is started, a battery voltage of the terminal, a photographing parameter of the first camera, or a temperature of a preset area in the terminal. Correspondingly, the preset condition may include but is not limited to one or more of the following:
the operating duration after the first camera is started is greater than first preset duration;
the battery voltage of the terminal is lower than a preset voltage;
a battery level of the terminal is lower than a preset battery level;
the photographing parameter of the first camera is higher than a first preset value, or the photographing parameter of the first camera is lower than a second preset value; where the photographing parameter value may be a parameter such as an impression parameter of the camera or a picture ISO value;
the temperature of the preset area in the terminal is higher than a first preset temperature; or
the temperature of the preset area in the terminal is lower than a second preset temperature; and the second preset temperature is lower than the first preset temperature.

For example, if the terminal determines that the operating duration after the first camera is started is greater than the first preset duration, and the temperature of the preset area in the terminal is higher than the first preset temperature, it may be determined that the operating parameter of the terminal meets the preset condition.

For another example, if the terminal determines that the temperature of the preset area in the terminal is lower than the second preset temperature, and the battery voltage of the terminal is lower than the preset voltage, it may be determined that the operating parameter of the terminal meets the preset condition.

Optionally, the operating parameter of the terminal may alternatively be total power consumption of the first camera and the second camera, and in this case, the preset condition may be: the total power consumption of the first camera and the second camera is greater than a power consumption threshold. The terminal may directly determine the total power consumption of the first camera and the second camera. Specifically, the terminal obtains an operating voltage and an operating current of the first camera, and obtains an operating voltage and an operating current of the second camera, so as to separately calculate power consumption of the first camera and power consumption of the second camera to determine the total power consumption of the first camera and the second camera.

Certainly, the foregoing description is merely an example. The preset condition may alternatively be combined in another manner, and examples are not given one by one herein.

It should be noted that, in this embodiment of this application, the terminal may determine the battery voltage by using a feedback signal of a module such as a battery, a power management chip, or a coulomb counter. Certainly, another manner may alternatively be used by the terminal to determine the battery voltage, and this is not limited in this embodiment of this application.

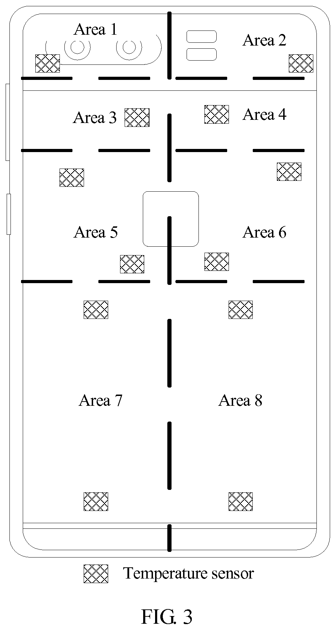

In this embodiment of this application, a terminal may be internally divided into a plurality of areas, and at least one temperature sensor may be disposed in each area. The terminal may read, in real time, a temperature measured by each temperature sensor to determine a temperature of each area. For example, as shown in FIG. 3, FIG. 3 is a schematic diagram of area division according to an embodiment of this application. In FIG. 3, the terminal is divided into a total of eight areas: area 1 to area 8. At least one temperature sensor is disposed in each area, and the terminal may determine a temperature of each area by using the temperature sensor.

In this embodiment of this application, the preset area may be any area in the terminal, and may be specifically determined based on an actual situation. The terminal may use a highest temperature in the temperatures that are read by all temperature sensors in the preset area as a temperature of the preset area, or use an average value of all the temperatures measured by all the temperature sensors as a temperature of the preset area. Optionally, the temperature of the preset area may alternatively be an average value obtained after a weighting calculation is performed on temperatures of a plurality of areas in the terminal. For example, with reference to FIG. 3, the terminal calculates an average value of temperatures from the area 1 to the area 8 in the terminal, and uses the average value of the temperatures from the area 1 to the area 8 as the temperature of the preset area.

Certainly, another manner may alternatively be used to determine the temperature of the preset area. Details are not described herein.

Optionally, the preset area is an area in which the first camera and/or the second camera are/is located.

It should be noted that a type of the temperature sensor in the terminal is not limited in this embodiment of this application, for example, the temperature sensor may be a negative temperature coefficient (Negative temperature coefficient, NTC) temperature sensor.

Optionally, before determining that the operating parameter of the terminal meets the preset condition, the terminal further needs to determine whether the first camera is allowed to operate in the second operating state. Specifically, if the terminal determines that the first camera is allowed to operate in the second operating state, step 102 is performed; or if the terminal determines that the first camera is not allowed to operate in the second operating state, the first camera still operates in the first operating state.

It should be noted that how the terminal determines whether the first camera is allowed to operate in the second operating state is not limited in this embodiment of this application. For example, the user may set, by using software, whether the first camera is allowed to operate in the second operating state, for example, the user sets, by using a camera application program, whether the first camera is allowed to operate in the second operating state. If the terminal determines that the first camera is set to be allowed to operate in the second operating state, it is determined that the first camera is allowed to operate in the second operating state.

For another example, the terminal may determine, by using the camera application program, whether a current running mode is a preset mode. If the current running mode is the preset mode, it is determined that the first camera is not allowed to operate in the second operating state. For example, the preset mode is the wide aperture mode, and if the terminal determines that the camera application program currently operates in the wide aperture mode, it may be determined that the first camera is not allowed to operate in the second operating state.

Certainly, the foregoing description is merely an example. The terminal may alternatively determine, in another manner, whether the first camera is not allowed to operate in the second operating state, and examples are not given one by one herein.

After the terminal changes a current operating state of the first camera from the first operating state to the second operating state, the operating state of the second camera may remain unchanged. Because power consumption of the first camera in the second operating state is less than power consumption of the first camera in the first operating state, the power consumption of the first camera may be reduced, so as to reduce the total power consumption of the first camera and the second camera.

Further, after setting the first camera to operate in the second operating state, the terminal may further set, based on a requirement, the first camera to operate in the first operating state, so as to collect an image by using the first camera. Specifically, the user sets the running mode of the camera application program in the terminal to a first running mode. The camera application program running in the first running mode needs to use the first camera operating in the first operating state to collect an image. The first running mode may be the wide aperture mode, or the like. In this case, when determining that the camera application program in the terminal needs to operate in the first running mode, the terminal may determine that the first camera needs to operate in the first operating state.

The following describes the foregoing process with reference to a specific embodiment.

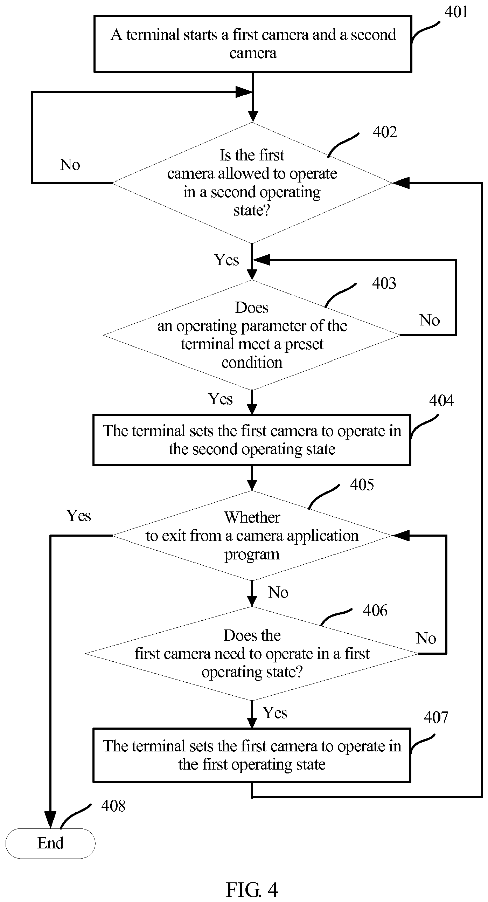

As shown in FIG. 4, FIG. 4 is a schematic flowchart of a camera control method according to an embodiment of this application.

Step 401: A terminal starts a first camera and a second camera.

The terminal may start the first camera and the second camera after receiving a user instruction for starting a camera application program. A running mode of the camera application program may be any one of a wide aperture mode, a panorama mode, a video photographing mode, a delay photographing mode, and a picture mode. The first camera operates in a first operating state, and the first camera may collect an image when operating in the first operating state. It should be noted that the user may instruct the terminal to exit from the camera application program at any moment. In this embodiment of this application, determining, in step 405, whether to exit from the camera application program is merely an example. For another case, reference may be made to description herein, and details are not described herein.

Step 402: The terminal determines whether the first camera is allowed to operate in a second operating state; and if the first camera is allowed to operate in the second operating state, go to step 403, or if the first camera is not allowed to operate in the second operating state, go to step 402.

The second operating state may be a sleep state or a closed state. For example, when the running mode of the camera application program is the wide aperture running mode, the first camera and the second camera need to simultaneously collect an image, and in this case, the first camera is not allowed to operate in the second operating state; and when the running mode of the camera application program is the picture mode, the second camera may independently take a picture, and therefore, in this case, the first camera is allowed to operate in the second operating state.

Step 403: The terminal determines whether an operating parameter of the terminal meets a preset condition; and if the operating parameter of the terminal meets the preset condition, go to step 404, or if the operating parameter of the terminal does not meet the preset condition, go to step 403.

An execution sequence between step 402 and step 403 is not limited in this embodiment of this application. Step 402 may alternatively be performed after step 403, that is, it is first determined whether the operating parameter of the terminal meets the preset condition; when the operating parameter of the terminal meets the preset condition, it is determined whether the first camera is allowed to operate in the second operating state; and if it is determined that the first camera is not allowed to operate in the second operating state, go to step 404.

The operating parameter of the terminal may be operating duration after the first camera is started and a temperature of a preset area in the terminal; and the preset condition is that the operating duration after the first camera is started is greater than first preset duration, and the temperature of the preset area in the terminal is higher than a first preset temperature.

The operating parameter of the terminal may alternatively be a battery voltage or a battery level; and the preset condition is that the battery voltage is lower than a preset voltage, or a battery level is lower than a preset battery level.

The terminal may start a timer when starting the first camera and the second camera. When timing duration of the timer is the first preset duration, an alarm is generated.

The terminal may reset the timer when going to step 404. Certainly, when going to step 404, the terminal may not reset the timer until the terminal exits from the camera application program. This is not limited in this embodiment of this application.

For how the terminal determines the temperature of the preset area, reference may be made to the foregoing description, and details are not described herein.

Step 404: The terminal sets the first camera to operate in the second operating state.

The second operating state may be a low power consumption state or a closed state, so as to reduce power consumption of the terminal.

Step 405: The terminal determines whether to exit from a camera application program; and if the terminal determines to exit from the camera application program, go to step 408, or if the terminal determines not to exit from the camera application program, go to step 406.

Optionally, Step 406: The terminal determines whether the first camera needs to operate in a first operating state; and if the first camera needs to operate in the first operating state, go to step 407, or if the first camera does not need to operate in the first operating state, go to step 405.

When the running mode of the camera application program is switched from a second running mode to a first running mode, the first camera needs to operate in the first operating state. For example, when it is detected that a running mode of a camera application program selected by a user is switched to a wide aperture mode, the first camera and the second camera need to collect an image together, that is, the terminal determines that the first camera needs to operate in the first operating state; or if it is detected that a running mode of a camera application program selected by a user is switched to a video photographing mode, the second camera may still collect an image independently, and therefore, the terminal determines that the first camera does not need to operate in the first operating state.

Optionally, when the running mode of the camera application program is still the second running mode, and when a user operation for triggering recording of an image is detected, the first camera is set to operate in the first operating state. For example, when the camera application program runs in a picture mode, the first camera is allowed to operate in the second operating state. When the operating parameter of the terminal meets the preset condition, the operating state of the first camera is set to the second operating state. When the user presses a photographing button, an image needs to be recorded at this moment, that is, photographing needs to be performed to generate a picture. To ensure quality of the picture, the operating state of the first camera may be switched to the first operating state after the user presses the photographing button. The first camera and the second camera collect an image together to form the picture.

Certainly, the foregoing description is merely an example. The terminal may alternatively determine, in another manner, whether the first camera needs to operate in the first operating state.

Step 407: The terminal sets the first camera to operate in the first operating state, and goes to step 402.

Step 408: End.

When the camera application program exits from running, the first camera and the second camera are closed.

After the camera application program is started, the second camera may be in an image collection state until the camera application program exits from running. Certainly, a case in which the second camera is closed or sleeps when the camera application program runs in the background is not excluded. This embodiment of this application is mainly applied to a case in which the user uses the camera application program after the camera application program is started.

In the foregoing embodiment, when the first camera operates in the first operating state, a corresponding camera application program may run in any running mode in the first running mode and the second running mode, and may be switched between various running modes. For example, when the first camera operates in the first operating state, the corresponding camera application program may run in any mode in a wide aperture mode, a picture mode, a delay photographing mode, or a video photographing mode, and may be switched between these modes.

When the first camera operates in the first operating state, a running mode of the corresponding camera application program may be divided into a first operating substate, a second operating substate, a third operating substate, and the like. For example, if the first operating substate is a video photographing state, the running mode of the corresponding camera application program is the video photographing mode; if the second operating substate is a wide aperture state, the running mode of the corresponding camera application program is the wide aperture mode; or if the third operating substate is a picture state, the running mode of the corresponding camera application program is the picture mode.

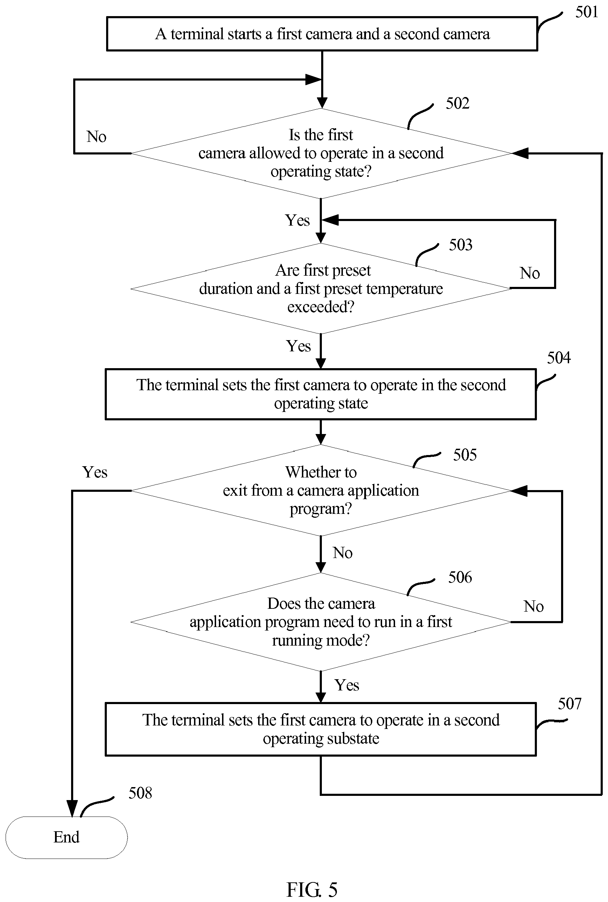

As shown in FIG. 5, FIG. 5 is a schematic flowchart of a camera control method according to an embodiment of this application. In this embodiment, if a first operating substate is a video photographing state, a running mode of a corresponding camera application program is a video photographing mode; if a second operating substate is a wide aperture state, a running mode of a corresponding camera application program is a wide aperture mode; and if a third operating substate is a picture state, a running mode of a corresponding camera application program is a picture mode.

A first running mode of the camera application program includes the wide aperture mode, and a second running mode includes the picture mode and the video photographing mode.

In the procedure shown in FIG. 5, a preset condition is that operating duration when a first camera is started is greater than first preset duration, and a temperature of a preset area in a terminal is higher than a first preset temperature.

In FIG. 5, when the terminal starts the first camera, an operating state of the first camera is the first operating substate; when the first camera is in a low power consumption state or is closed, the operating state of the first camera is a second operating state; and when the camera application program runs in the first running mode, the first camera needs to correspondingly operate in the second operating substate.

Step 501: The terminal starts the first camera and a second camera.

The terminal may start the first camera and the second camera after receiving a user instruction for starting the camera application program. It should be noted that the user may instruct the terminal to exit from the camera application program at any moment. In this embodiment of this application, determining, in step 505, whether to exit from the camera application program is merely an example. For another case, reference may be made to description herein, and details are not described herein.

Step 502: The terminal determines whether the first camera is allowed to operate in a second operating state; and if the first camera is allowed to operate in the second operating state, go to step 503, or if the first camera is not allowed to operate in the second operating state, go to step 502.

In this case, the camera application program runs in the video photographing mode, and therefore, the first camera is allowed to operate in the second operating state.

Step 503: The terminal determines whether operating duration after the first camera is started is greater than first preset duration, and whether a temperature of a preset area in the terminal is higher than a first preset temperature; and if the operating duration after the first camera is started is greater than the first preset duration, and the temperature of the preset area in the terminal is higher than the first preset temperature, go to step 504, or if the operating duration after the first camera is started is not greater than the first preset duration, and/or the temperature of the preset area in the terminal is not higher than the first preset temperature, go to step 503.

The terminal may start a timer when starting the first camera and the second camera. When timing duration of the timer is the first preset duration, an alarm is generated.

An execution sequence between step 502 and step 503 is not limited in this embodiment of this application. Step 502 may alternatively be performed after step 503, that is, it is first determined whether the operating duration after the first camera is started is greater than the first preset duration, and whether the temperature of the preset area in the terminal is higher than the first preset temperature. If both the foregoing conditions are met, it is determined whether the first camera is allowed to operate in the second operating state; and if it is determined that the first camera is not allowed to operate in the second operating state, go to step 504.

The terminal may reset the timer when going to step 504. Certainly, when going to step 504, the terminal may not reset the timer until the terminal exits from the camera application program. This is not limited in this embodiment of this application.

For how the terminal determines the temperature of the preset area, reference may be made to the foregoing description, and details are not described herein.

Step 504: The terminal sets the first camera to operate in the second operating state.

The second operating state is a low power consumption state or a closed state, so as to reduce power consumption of the terminal.

Step 505: The terminal determines whether to exit from a camera application program; and if the terminal determines to exit from the camera application program, go to step 508, or if the terminal determines not to exit from the camera application program, go to step 506.

Optionally, Step 506: The terminal determines whether the camera application program needs to run in a first running mode; and if the camera application program needs to run in the first running mode, go to step 507, or if the camera application program does not need to run in the first running mode, go to step 505.

When the user sets the camera application program to run in the first running mode, for example, the wide aperture mode, a corresponding operating state of a first camera is the second operating substate, for example, the wide aperture state, go to step 507.

When the camera application program still runs in the video photographing mode, go to step 505.

Step 507: The terminal sets the first camera to operate in the second operating substate, and goes to step 502.

The first camera is set to the wide aperture state, and goes to step 502. When the camera application program still runs in the wide aperture mode, it is determined in step 502 that the first camera is not allowed to operate in the second operating state. If the camera application program is switched from the wide aperture mode to the picture mode, correspondingly, the first camera is switched to the picture state (the third operating substate); and therefore, it is determined in step 502 that the first camera is allowed to operate in the second operating state, and step 503 is performed. If the camera application program is switched from the wide aperture mode to the picture mode, correspondingly, the first camera is switched to the picture state; if step 502 is not triggered by the user, the first camera may still operate in the picture state for specified duration, and step 502 is triggered when the specified duration is exceeded; and therefore, it is determined in step 502 that the first camera is allowed to operate in the second operating state, and step 503 is performed.

Step 508: End. The first camera and the second camera are closed, for example, no power is supplied to the first camera and the second camera.

It should be noted that in this embodiment of this application, when the camera application program starts to run, an operating parameter of the terminal may have met the preset condition, and therefore, the first camera may directly operate in the second state.

The terminal is equipped with the first camera and the second camera. When starting the camera application program, the user selects the running mode of the camera application program. For example, as shown in FIG. 5, FIG. 5 is a schematic diagram of a camera application program according to an embodiment of this application. Modes that may be selected by the user in the camera application program may be: a panorama mode, a delay photographing mode, a wide aperture mode, a video mode, a photographing mode, and the like.

When the user starts the camera application program, the camera application program may operate in the photographing mode by default. In this case, the terminal starts the first camera and the second camera. In addition, when the terminal starts the first camera, the timer is started for timing.

The terminal may be internally divided into a plurality of areas, and a plurality of temperature sensors may be disposed in each area. Specifically, reference may be made to FIG. 3. The terminal may read, in real time, a temperature measured by each temperature sensor, and determine a temperature of each area. The following uses an area in which the first camera and the second camera are located as an example of the preset area for description.

Before setting the first camera to operate in the second operating state, the terminal first determines whether the first camera is allowed to operate in the second operating state. Based on design of an actual product, the user may select different running modes in the camera application program, and the camera application program may also determine, in real time, an algorithm to be invoked. The running mode of the camera application program and the invoked algorithm have different requirements on a quantity of cameras that are required. Therefore, in the camera application program, priority design is performed on the running mode, the algorithm, and a power consumption control solution, and the terminal determines, in real time, whether the first camera is allowed to operate in the second operating state. For example, when the camera application program operates in the wide aperture mode, the first camera is not allowed to operate in the second operating state.

With reference to the foregoing description, after the terminal determines that the first camera is allowed to operate in the second operating state, as timing duration of the timer increases, electric energy is constantly consumed during use of the first camera and the second camera, phenomena such as overheat may occur on the terminal, and a temperature in the preset area detected by the terminal also constantly increases. When the terminal determines that the timing duration of the timer is the first preset duration and/or the temperature of the preset area is higher than the first preset temperature, it is determined that the first camera needs to be set to the low power consumption state or the closed state. The first preset duration may be 2 minutes, and the first preset temperature may be 51°C. Certainly, values of the first preset duration and the first preset temperature may be set based on a specific product. After setting the first camera to the low power consumption state or the closed state, the terminal may keep the second camera operating only in the running mode, that is, a normal image collecting mode. In this case, total power consumption of the first camera and the second camera decreases, the temperature of the preset area no longer increases or an increasing speed is reduced.

It should be noted that when setting the first camera to operate in the second operating state, the terminal may reset the timer to wait for next timing; and alternatively, the terminal may not reset the timer until the terminal exits from the camera application program. This is not limited in this embodiment of this application.

After triggering setting of the first camera to the low power consumption state or the closed state, the terminal may restart the first camera based on a specific function requirement. The action solution includes two design aspects: one is a mechanism for restarting the first camera, and the restart mechanism includes but is not limited to: the user selects a running mode of the camera application program on an interface of the camera application program, and the first camera needs to be invoked to determine an algorithm of the camera application program; and the other is a mechanism used by the terminal to allow re-triggering of the action of setting the first camera to the low power consumption state or the closed state, for example, in 30s (the time threshold of the specific product) after a condition for the foregoing restart mechanism fails, "whether the first camera is allowed to operate in the second operating state" is set to "yes". For example, after the action of "setting the first camera to the low power consumption state or the closed state" is triggered, when the user sets the running mode of the camera application program to the wide aperture mode, the terminal may restart the first camera. Then, at a moment when the user sets the running mode of the camera application program to exiting from the wide aperture mode, the timer is started. The timing duration of the timer is the second preset duration, the second preset duration may be 30s. Before the timer expires, the terminal does not allow setting of the first camera to the low power consumption state or the closed state. After the timer expires, the terminal allows setting of the first camera to the low power consumption state or the closed state.

When the user exits from the interface of the camera application program, a state record of "the operating state of the first camera is the low power consumption state or the closed state" becomes invalid; and the foregoing solution is repeated when the camera application program is restarted.

Based on a same technical conception, an embodiment of this application further provides a terminal, and the terminal may perform the foregoing method embodiments.

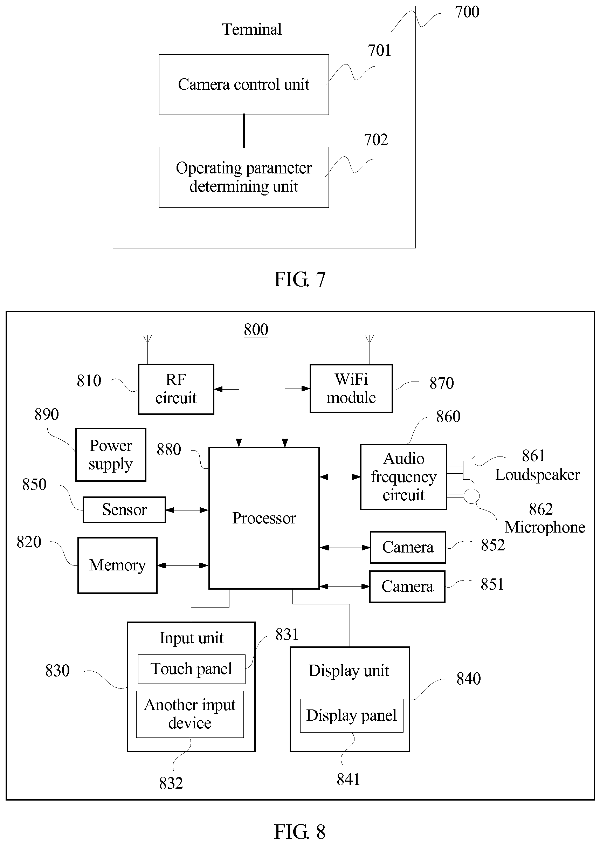

As shown in FIG. 7, FIG. 7 is a schematic structural diagram of a terminal according to an embodiment of this application. The terminal 700 may be a device such as a mobile phone.

Referring to FIG. 7, the terminal 700 includes:
a camera control unit 701, configured to: start a first camera and a second camera, where the first camera and the second camera are located on a same side of the terminal, and the first camera operates in a first operating state; and
an operating parameter determining unit 702, configured to determine whether an operating parameter of the terminal meets a preset condition; where
the camera control unit 701 is configured to: when the operating parameter determining unit 702 determines that the operating parameter of the terminal meets the preset condition, switch the first camera from the first operating state to a second operating state, where the second operating state is a low power consumption state or a closed state.

Optionally, when the operating parameter determining unit 702 determines that the operating parameter of the terminal does not meet the preset condition, the camera control unit 701 keeps the first camera operating in the first operating state.

Optionally, the operating parameter includes one or more of the following:
operating duration after the first camera is started;
a battery voltage of the terminal;
a photographing parameter of the first camera; and
a temperature of a preset area in the terminal; or
the preset condition includes one or more of the following:
   the operating duration after the first camera is started is greater than first preset duration;
   the battery voltage of the terminal is lower than a preset voltage;
   the photographing parameter of the first camera is higher than a first preset value, or the photographing parameter of the first camera is lower than a second preset value;
   the temperature of the preset area in the terminal is higher than a first preset temperature; or
   the temperature of the preset area in the terminal is lower than a second preset temperature; and the second preset temperature is lower than the first preset temperature.

Optionally, the second operating state is the low power consumption mode or the closed state.

Optionally, before switching the first camera from the first operating state to the second operating state, the camera control unit 701 is further configured to:
determine that the first camera is allowed to operate in the second operating state.

Optionally, after switching the first camera from the first operating state to the second operating state, the camera control unit 701 is further configured to:
detect whether there is an event triggering the first camera to operate in the first operating state; and
when the event triggering the first camera to operate in the first operating state is detected, switch the first camera from the operating state to the first operating state.

Optionally, the detecting whether there is an event triggering the first camera to operate in the first operating state is specifically:
detecting whether a running mode of a camera application program is switched from a second running mode to a first running mode, where the first running mode is a running mode corresponding to the first camera operating in the first operating state, and the second running mode is a running mode in which the first camera is allowed to operate in the second operating state.

Optionally, the detecting whether there is an event triggering the first camera to operate in the first operating state is specifically:
detecting, by the terminal, whether a user triggers recording of an image, for example, detecting whether the user presses a photographing button or a recording button.

It should be understood that division of the foregoing units is merely logical function division. In actual implementation, all or some of units may be integrated into a physical entity, or may be physically separate. In this embodiment of this application, the camera control unit and the operating parameter determining unit may be implemented by a processor. As shown in FIG. 8, FIG. 8 shows a structure of a terminal according to an embodiment of this application.

The terminal may be any terminal device, including: a mobile phone, a tablet computer, a personal digital assistant (Personal Digital Assistant, PDA), a point of sales (Point of Sales, POS), a vehicle-mounted computer, or the like. The mobile phone is used as an example of the terminal, and FIG. 8 is a block diagram of a partial structure of a mobile phone 800 related to the terminal according to an embodiment of this application. Referring to FIG. 8, the mobile phone 800 includes components such as a radio frequency (Radio Frequency, RF) circuit 810, a memory 820, an input unit 830, a display unit 840, a sensor 850, an audio circuit 860, a Wireless Fidelity (wireless fidelity, WiFi) module 870, a processor 880, and a power supply 890. A person skilled in the art may understand that the structure of the mobile phone shown in FIG. 8 is only used as an example of an implementation, does not constitute any limitation on the mobile phone, and may include components more or fewer than those shown in the figure, or combine some components, or have a different component arrangement.

The following describes all constituent components of the mobile phone 800 in detail with reference to FIG. 8.

An RF circuit 810 may be configured to send and receive signals in an information sending or receiving process or a call process, and in particular, after receiving downlink information of a base station, send the downlink information to a processor 880 for processing; and in addition, send designed uplink data to the base station. Generally, the RF circuit includes but is not limited to an antenna, at least one amplifier, a transceiver, a coupler, a low noise amplifier (Low Noise Amplifier, LNA), a duplexer, and the like. In addition, the RF circuit 810 may further communicate with a network and another device through wireless communication. The wireless communication may be based on any communications standard or protocol, which includes but is not limited to a Global system for mobile communications (Global System of Mobile communication, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, and a short message service (Short Messaging Service, SMS).

A memory 820 may be configured to store a software program and a module, and the processor 880 performs various function applications of the mobile phone 800 and data processing by running the software program and the module that are stored in the memory 820. The memory 820 may mainly include a storage program area and a storage data area. The storage program area may store an operating system, an application program required by at least one function (such as a voice playing function and an image playing function), and the like; and the storage data area may store data (such as audio data and a telephone book) that is created based on use of the mobile phone 800 and the like. In addition, the memory 820 may include a high-speed random access memory, and may further include a non-volatile memory such as at least one magnetic disk storage device, a flash memory device, or another volatile solid-state storage device.

An input unit 830 may be configured to receive entered digit or character information, and generate key signal input related to user setting and function control of the mobile phone 800. Specifically, the input unit 830 may include a touch panel 831 and another input device 832. The touch panel 831, which is also referred to as a touchscreen, can collect a touch operation (for example, an operation of the user on the touch panel 831 or near the touch panel 831 by using any proper object or accessory such as a finger or a stylus) of the user on or near the touch panel 831, and drive a corresponding connection apparatus based on a preset program. Optionally, the touch panel 831 may include two parts: a touch detection apparatus and a touch controller. The touch detection apparatus detects a touch direction of the user, detects a signal brought by the touch operation, and transmits the signal to the touch controller. The touch controller receives touch information from the touch detection apparatus, converts the touch information to touch point coordinates, then sends the touch point coordinates to the processor 880, and can receive and perform a command sent by the processor 880. In addition, the touch panel 831 may be implemented by using a plurality of types, such as a resistive type, a capacitive type, an infrared ray, and a surface acoustic wave. In addition to the touch panel 831, the input unit 830 may include the another input device 832. Specifically, the another input device 832 may include but is not limited to one or more of a physical keyboard, a function key (for example, a volume control key or an on/off key), a trackball, a mouse, or an operating lever.

The display unit 840 may be configured to display information entered by the user or information provided for the user, and various menus of the mobile phone 800. The display unit 840 may include a display panel 841. Optionally, the display panel 841 may be implemented in a form such as liquid crystal display (Liquid Crystal Display, LCD) or an organic light-emitting diode (Organic Light-Emitting Diode, OLED). Further, the touch panel 831 may cover the display panel 841. When detecting a touch operation on or near the touch panel 831, the touch panel 831 transfers the touch operation to the processor 880 to determine a type of a touch event, and then the processor 880 provides corresponding visual output on the display panel 841 based on the type of the touch event. Although the touch panel 831 and the display panel 841 in FIG. 8 are used as two independent components to implement input and input functions of the mobile phone 800, in some embodiments, the touch panel 831 and the display panel 841 may be integrated to implement the input and output functions of the mobile phone 800.

The mobile phone 800 may further include at least two cameras. A camera 851 and a camera 852 are disposed on a same side of the mobile phone, for example, on the rear side of the mobile phone 800, to collect an image. Although not shown in the figure, a camera may also be disposed on the front side of the mobile phone 800. The mobile phone 800 may further include a sensor 850, for example, an optical sensor, a motion sensor, and another sensor.

An audio frequency circuit 860, a loudspeaker 861, and a microphone 862 may provide an audio interface between the user and the mobile phone 800. The audio frequency circuit 860 may transmit, to the loudspeaker 861, a received electrical signal obtained after audio data conversion, and the loudspeaker 861 converts the electrical signal to a sound signal for output. In addition, the microphone 862 converts a collected sound signal to an electrical signal, and the audio frequency circuit 860 receives the electrical signal, converts the electric signal to audio data, outputs the audio data to the processor 880 for processing, and then sends, by using the RF circuit 810, the processed audio data to, for example, another mobile phone, or sends the processed audio data to the memory 820 for further processing.

WiFi is a short-distance radio transmission technology. The mobile phone 800 may use a WiFi module 870 to help the user send and receive emails, browse a web page, gain access to streaming media, and the like. The WiFi module 870 provides the user with wireless broadband Internet access. Although FIG. 8 shows the WiFi module 870, it can be understood that the WiFi module 870 is not a mandatory part of the mobile phone 800, and may be omitted according to a need while retaining the essence of the present invention.

As a control center of the mobile phone 800, the processor 880 uses various interfaces and lines to connect all parts of the entire mobile phone. By running or executing a software program and/or a module that are/is stored in the memory 820 and invoking data stored in the memory 820, the processor 880 performs various functions of the mobile phone 800 and processes data, so as to perform overall monitoring on the mobile phone. Optionally, the processor 880 may include one or more processing units. Optionally, an application processor and a modem processor may be integrated into the processor 880, where the application processor mainly processes an operating system, a user interface, an application program, and the like, and the modem processor mainly processes radio communication. It may be understood that the foregoing modem processor may not be integrated into the processor 880.

The mobile phone 800 further includes a power supply 890 (for example, a battery) that supplies power to each component. Optionally, the power supply may be logically connected to the processor 880 by using a power management system, so as to implement management functions such as charging, discharging, and power consumption management by using the power management system.

The mobile phone 800 may further include a sensor 850, for example, a temperature sensor. The temperature sensor is configured to detect a temperature.

Although not shown in the figure, the mobile phone 800 may further include a Bluetooth module, and the like. Details are not described herein.

The processor 880 may control the camera 851 and the camera 852 by running the software program that is stored in the memory 820. The temperature sensor and the like may be invoked in a control process. For details, reference may be made to the method embodiment of this application.

The mobile phone is equipped with dual cameras (A and B). A is named a primary camera, and B is named a secondary camera. When a user starts a camera application, a preview is displayed on an interface. In a default state, the mobile phone may start the two cameras, A and B, at the same time; and in this case, power consumption of the mobile phone is a value X1. In addition, when the user opens the camera application interface, the mobile phone starts a timer t, and a value of the timer t may be reset when the user exits from the camera interface.

Based on a requirement of an actual product, a plurality of temperature monitoring points (NTC1, NTC2, ..., NTCn) may be disposed at different locations on the mobile phone. The mobile phone may read a value of each NTC in real time, and a corresponding action may be performed when the NTC value reaches a set threshold Tm.

Based on design of the actual product, the user may select different function modes in the camera application, and the application may also intelligently determine, in real time, an algorithm to be invoked. These functions and algorithms have different requirements on a quantity of cameras, and this may affect a limitation on the quantity of cameras on the mobile phone. Therefore, in the camera application, priority design is performed on the function mode, the algorithm, and a power consumption control solution, and the mobile phone determines, in real time, "whether a solution of 'closing the secondary camera-B' is allowed".

With use of the camera application, the mobile phone becomes hot, and the value of the timer t and the value of each NTC change. After the application determines that "whether 'closing of the secondary camera-B' is allowed" is "yes", when "the value of the timer t reaches 2 minutes (a time threshold of a specific product)", and/or "a temperature value of a specified NTCi reaches 51°C (a set threshold of the specific product)", the mobile phone may perform an action of "closing the secondary camera-B". In this case, the mobile phone may keep only the primary camera-A running, and perform subsequent processing such as previewing based on data of the mobile phone, and the power consumption value becomes X2.

After triggering the action of "closing the secondary camera-B", the mobile phone may restart the secondary camera-B based on a specific function requirement. The action solution includes two design aspects: one is a mechanism for restarting the secondary camera-B, and the restart mechanism includes but is not limited to: the user performs a function selection operation on the interface of the mobile phone, and that the secondary camera needs to be invoked to determine an algorithm of the camera application; and the other is a mechanism used by the mobile phone to allow re-triggering the action of "closing the secondary camera-B" when the secondary camera-B is restarted. For example, in 30s (the time threshold of the specific product) after a condition for the foregoing restart mechanism fails, "whether "closing of the secondary camera-B" is allowed" is set to "yes".

When the user exits from the camera application interface, a state record on the foregoing action of "closing the secondary camera-B, and starting only the primary camera-A" becomes invalid; and the foregoing solution is repeated when the camera application is restarted.

The mobile phone is equipped with dual cameras (A and B). A is named a primary camera, and B is named a secondary camera. When a user starts a camera application, a preview is displayed on the interface. In a default state, the mobile phone may start the two cameras, A and B, at the same time; and in this case, power consumption of the mobile phone is a value X1.

Based on a requirement of an actual product, a plurality of temperature monitoring points (NTC1, NTC2, ..., NTCn) may be disposed at different locations on the mobile phone. The mobile phone may read a value of each NTC in real time; and in addition, the mobile phone monitors, in real time, a state parameter related to a current battery (for example, a battery voltage V). When values of the NTC, the battery parameter V, and the like reach set thresholds, the mobile phone may perform a corresponding action.

Based on design of the actual product, the user may select different function modes in the camera application, and the application may also intelligently determine, in real time, an algorithm to be invoked. These functions and algorithms have different requirements on a quantity of cameras, and this may affect a limitation on the quantity of cameras on the mobile phone. Therefore, in the camera application, priority design is performed on the function mode, the algorithm, and a power consumption control solution, and the mobile phone determines, in real time, "whether a solution of'closing the secondary camera-B' is allowed".

After the user enters the camera application, the mobile phone monitors each NTC value and a value of the battery parameter V in real time. After the application determines that "whether 'closing of the secondary camera-B' is allowed'" is "yes", when "the NTC temperature is lower than Y1 (a time threshold of a specific product)", and "the battery voltage V is lower than Y2 (a set threshold of the specific product)", the mobile phone may perform an action of "closing the secondary camera-B". In this case, the mobile phone may start only the primary camera-A, and perform subsequent processing such as previewing based on data of the mobile phone, and the power consumption value becomes X2.

After triggering the action of "closing the secondary camera-B", the mobile phone may restart the secondary camera-B based on a specific function requirement. The action solution includes two design aspects: one is a mechanism for restarting the secondary camera-B, and the restart mechanism includes but is not limited to: the user performs a function selection operation on the interface of the mobile phone, and that the secondary camera needs to be invoked to determine an algorithm of the camera application; and the other is a mechanism used by the mobile phone to allow re-triggering the action of "closing the secondary camera-B" when the secondary camera-B is restarted. For example, in 30s (the time threshold of the specific product) after a condition for the foregoing restart mechanism fails, "whether "closing of the secondary camera-B" is allowed" is set to "yes".

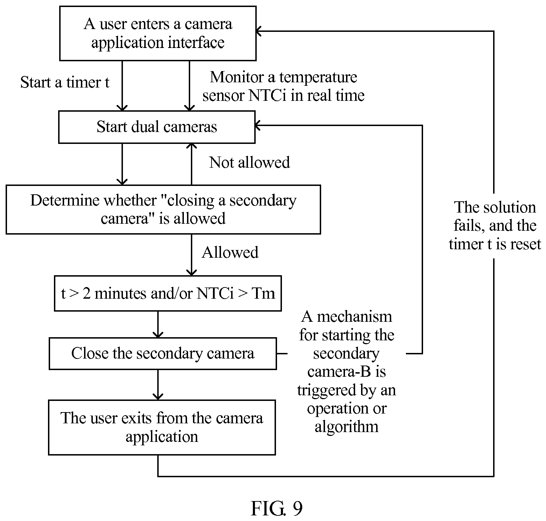

When the user exits from the camera application interface, a state record on the foregoing action of "closing the secondary camera-B, and starting only the primary camera-A" becomes invalid; and the foregoing solution is repeated when the camera application is restarted. Referring to FIG. 9, FIG. 9 is a schematic flowchart of a camera control method according to an embodiment of this application.

Physical parts and components in this embodiment of this application include the temperature sensor (NTC), the mobile phone processor, the camera, the dual cameras, the battery, and the like.

Referring to FIG. 9, FIG. 9 is a schematic flowchart of a camera control method according to an embodiment of this application.

A mobile phone is equipped with dual cameras (A and B). A is named a primary camera, and B is named a secondary camera. When a user starts a camera application, a preview is displayed on an interface. In a default state, the mobile phone may start the two cameras, A and B, at the same time; and in this case, power consumption of the mobile phone is a value X1. In addition, when the user opens the camera application interface, the mobile phone starts a timer t, and a value of the timer t may be reset when the user exits from the camera interface.

Based on a requirement of an actual product, a plurality of temperature monitoring points (NTC1, NTC2, ..., NTCn) may be disposed at different locations on the mobile phone. As shown in the figure, the mobile phone may read a value of each NTC in real time, output a temperature parameter NTCi (for example, NTCi is a selected NTC value or an average value of n NTC values), and perform a corresponding action when the NTCi value reaches a set threshold Tm.

Based on design of the actual product, the user may select different function modes in the camera application, and the application may also intelligently determine, in real time, an algorithm to be invoked. These functions and algorithms have different requirements on a quantity of cameras, and this may affect a limitation on the quantity of cameras on the mobile phone. Therefore, in the camera application, priority design is performed on the function mode, the algorithm, and a power consumption control solution, and the mobile phone determines, in real time, "whether a solution of'closing the secondary camera-B' is allowed". For example, when the user selects the "wide aperture" mode, or taps a "photographing" button, the solution of "closing the secondary camera-B" is not allowed by the mobile phone.

With use of the camera application, the mobile phone becomes hot, and the value of the timer t and the value of the temperature parameter NTCi change. After the application determines that "whether 'closing of the secondary camera-B' is allowed" is "yes", when "the value of the timer t reaches tm = 2 minutes (a time threshold of a specific product)", and "a temperature value of the temperature parameter NTCi reaches Tm = 51°C (a set threshold of the specific product)", the mobile phone may perform an action of "closing the secondary camera-B". In this case, the mobile phone may keep only the primary camera-A running, and perform subsequent processing such as previewing based on data of the mobile phone, and the power consumption value becomes X2.

After triggering the action of "closing the secondary camera-B", the mobile phone may restart the secondary camera-B based on a specific function requirement. The action solution includes two design aspects: one is a mechanism for restarting the secondary camera-B, and the restart mechanism includes but is not limited to: the user performs a function selection operation on the interface of the mobile phone, and that the secondary camera needs to be invoked to determine an algorithm of the camera application; and the other is a mechanism used by the mobile phone to allow re-triggering the action of "closing the secondary camera-B" when the secondary camera-B is restarted. For example, in 30s (the time threshold of the specific product) after a condition for the foregoing restart mechanism fails, "whether "closing of the secondary camera-B" is allowed" is set to "yes". For example, after the action of "closing the secondary camera-B" is triggered, the mobile phone may restart the secondary camera-B when the user selects the "wide aperture" mode, and the mobile phone may allow re-triggering of the action of "closing the secondary camera-B" in 30s after the user exits from the "wide aperture" mode. For another example, after the action of "closing the secondary camera-B" is triggered, the mobile phone may restart the secondary camera-B when the user taps the "photographing" button, and the mobile phone may allow re-triggering of the action of "closing the secondary camera-B" in 30s after a photographing procedure ends.

When the user exits from the camera application interface, a state record on the foregoing action of "closing the secondary camera-B, and starting only the primary camera-A" becomes invalid; and the foregoing solution is repeated when the camera application is restarted.

An overheat problem of the mobile phone after being used for a long time in a high power consumption camera scenario may be avoided. Under a set threshold condition, dual-camera running is changed to single-camera running. This may significantly reduce real-time power consumption of the camera scenario, and reduce an overheat risk of the mobile phone in the scenario.

In addition, a time threshold determining condition of the solution may ensure that the camera application runs in a dual-camera state in a specified time tm = 2 minutes (for example), thereby implementing high performance of the product camera, and ensuring basic user experience.

In a multi-camera camera application scenario, the solution of changing, based on the threshold determining, the dual-camera running to the single-camera running may more significantly reduce the power consumption and the overheat risk of the entire system compared with the prior art. After the dual-camera running is switched to the single-camera running, refresh frequencies for image processing and display content previewing do not change, and user experience of a dynamic picture may not be affected. There is one time threshold determining condition in this embodiment of this application, and the threshold value may be set based on the product requirement. In the time period, it may be ensured that the product starts a plurality of cameras to achieve related performance.

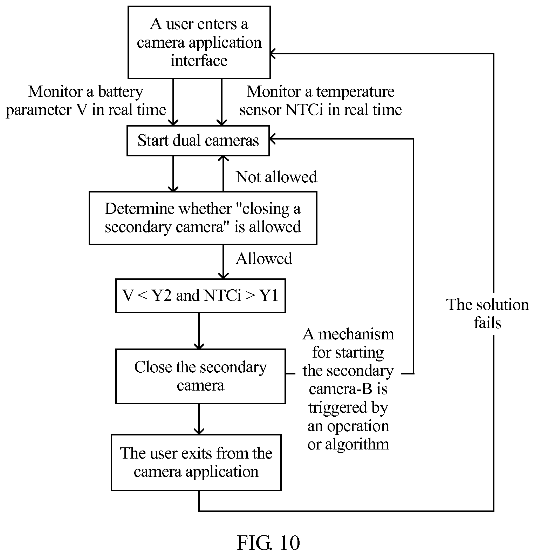

Referring to FIG. 10, FIG. 10 is a schematic flowchart of a camera control method according to an embodiment of this application.

A mobile phone is equipped with dual cameras (A and B). A is named a primary camera, and B is named a secondary camera. When a user starts a camera application, a preview is displayed on the interface. In a default state, the mobile phone may start the two cameras, A and B, at the same time; and in this case, power consumption of the mobile phone is a value X1.

Based on a requirement of an actual product, a plurality of temperature monitoring points (NTC1, NTC2, ..., NTCn) may be disposed at different locations on the mobile phone. As shown in the figure, the mobile phone may read a value of each NTC in real time, and output a temperature parameter NTCi (for example, NTCi is a selected NTC value or an average value of n NTC values). In addition, the mobile phone monitors a related state parameter of a current battery in real time (for example, a battery voltage V). When values of the temperature parameter NTCi, the battery parameter V, and the like reach set thresholds, the mobile phone may perform a corresponding action.

Based on design of the actual product, the user may select different function modes in the camera application, and the application may also intelligently determine, in real time, an algorithm to be invoked. These functions and algorithms have different requirements on a quantity of cameras, and this may affect a limitation on the quantity of cameras on the mobile phone. Therefore, in the camera application, priority design is performed on the function mode, the algorithm, and a power consumption control solution, and the mobile phone determines, in real time, "whether a solution of'closing the secondary camera-B' is allowed". For example, when the user selects the "wide aperture" mode, or taps a "photographing" button, the solution of "closing the secondary camera-B" is not allowed by the mobile phone.

After the user enters the camera application, the mobile phone monitors each NTC value and a value of the battery parameter V in real time. After the application determines that "whether 'closing of the secondary camera-B' is allowed'" is "yes", when "the value of the temperature parameter NTCi is lower than Y1 (a time threshold of a specific product)", and "the battery voltage V is lower than Y2 (a set threshold of the specific product)", the mobile phone may perform an action of "closing the secondary camera-B". In this case, the mobile phone may start only the primary camera-A, and perform subsequent processing such as previewing based on data of the mobile phone, and the power consumption value becomes X2.

After triggering the action of "closing the secondary camera-B", the mobile phone may restart the secondary camera-B based on a specific function requirement. The action solution includes two design aspects: one is a mechanism for restarting the secondary camera-B, and the restart mechanism includes but is not limited to: the user performs a function selection operation on the interface of the mobile phone, and that the secondary camera needs to be invoked to determine an algorithm of the camera application; and the other is a mechanism used by the mobile phone to allow re-triggering the action of "closing the secondary camera-B" when the secondary camera-B is restarted. For example, in 30s (the time threshold of the specific product) after a condition for the foregoing restart mechanism fails, "whether "closing of the secondary camera-B" is allowed" is set to "yes". For example, after the action of "closing the secondary camera-B" is triggered, the mobile phone may restart the secondary camera-B when the user selects the "wide aperture" mode, and the mobile phone may allow re-triggering of the action of "closing the secondary camera-B" in 30s after the user exits from the "wide aperture" mode. For another example, after the action of "closing the secondary camera-B" is triggered, the mobile phone may restart the secondary camera-B when the user taps the "photographing" button, and the mobile phone may allow re-triggering of the action of "closing the secondary camera-B" in 30s after a photographing procedure ends.

When the user exits from the camera application interface, a state record on the foregoing action of "closing the secondary camera-B, and starting only the primary camera-A" becomes invalid; and the foregoing solution is repeated when the camera application is restarted.

In a low temperature and low battery level scenario, the mobile phone starts only one camera when the camera application is used. This may avoid a high load and a high current when a plurality of cameras are simultaneously started in the camera application, thereby significantly reducing a probability of shutdown of the mobile phone because of the high load in the scenario.

A gap of a multi-camera scenario high power consumption solution in the low temperature and low battery level scenario is filled. This may significantly reduce the load and the current under the condition in the camera scenario, thereby reducing the probability of shutdown because of the high load and the high current under the condition in the camera scenario.

An overheat problem of the mobile phone after being used for a long time in a high power consumption camera scenario may be avoided. Under a set threshold condition, dual-camera running is changed to single-camera running. This may significantly reduce real-time power consumption of the camera scenario, and reduce an overheat risk of the mobile phone in the scenario.

In addition, a time threshold determining condition of the solution may ensure that the camera application runs in a dual-camera state in a specified time tm = 2 minutes (for example), thereby implementing high performance of the product camera, and ensuring basic user experience.

In addition, this solution fills the gap of the multi-camera scenario high power consumption solution in the low temperature and low battery level scenario. This may significantly reduce the load and the current under the condition in the camera scenario, thereby reducing the probability of shutdown because of the high load and the high current under the condition in the camera scenario.

For a function design requirement of the camera application on the mobile phone, this solution supports the power consumption control solution and priority determining of an application mode and an algorithm, and whether use of the power consumption control solution is allowed, and whether the secondary camera-B needs to be restarted may be flexibly set.

When an electronic product (which is not limited to a mobile phone product) previews a photographing scene, a temperature, a time, and a battery parameter are used as reference for determining an action of switching from dual-camera running to single-camera running (or an action of switching from m-camera running to n-camera running, and m > n).

Related parts of the method embodiments of this application may be mutually referenced. The apparatus provided in each apparatus embodiment is configured to perform the method provided in a corresponding method embodiment. Therefore, reference may be made to the related part in the related method embodiment for understanding each apparatus embodiment.

A person of ordinary skill in the art should understand that all or some of the steps of the method specified in any foregoing embodiment may be implemented by a program instructing related hardware. The program may be stored in a readable storage medium of a device such as a flash memory or an EEPROM. When the program runs, the program performs all or some of the steps described above.

In the foregoing specific implementations, the objective, technical solutions, and benefits of the embodiments of this application are further described in detail. It should be understood that different embodiments may be combined, and the foregoing descriptions are merely specific implementations of the embodiments of this application, but are not intended to limit the protection scope of the embodiments of this application. Any combination, modification, equivalent replacement, or improvement made without departing from the spirit and principle of the embodiments of this application should fall within the protection scope of the embodiments of this application.

## Claims

1. A camera control method, comprising:
starting, by a terminal, a first camera and a second camera, wherein the first camera and the second camera are located on a same side of the terminal, and the first camera operates in a first operating state; and
when an operating parameter of the terminal meets a preset condition, switching the first camera from the first operating state to a second operating state, wherein the second operating state is a low power consumption state or a closed state.

2. The method according to claim 1, wherein the operating parameter comprises one or more of the following:
operating duration after the first camera is started;
a battery voltage of the terminal;
a photographing parameter of the first camera; or
a temperature of a preset area in the terminal; and
the preset condition comprises one or more of the following:
the operating duration after the first camera is started is greater than first preset duration;
the battery voltage of the terminal is lower than a preset voltage;
the photographing parameter of the first camera is higher than a first preset value, or the photographing parameter of the first camera is lower than a second preset value;
the temperature of the preset area in the terminal is higher than a first preset temperature; or
the temperature of the preset area in the terminal is lower than a second preset temperature; and the second preset temperature is lower than the first preset temperature.

3. The method according to any one of claims 1 to 2, wherein before the switching the first camera from the first operating state to a second operating state, the method further comprises:
determining, by the terminal, that the first camera is allowed to operate in the second operating state.

4. The method according to any one of claims 1 to 3, wherein after the terminal changes a current operating state of the first camera from the first operating state to the second operating state, the method further comprises:
detecting, by the terminal, whether there is an event triggering the first camera to operate in the first operating state; and
when the event triggering the first camera to operate in the first operating state is detected, switching the first camera from the operating state to the first operating state.

5. The method according to claim 4, wherein the detecting, by the terminal, whether there is an event triggering the first camera to operate in the first operating state comprises:
detecting, by the terminal, whether a running mode of a camera application program is switched from a second running mode to a first running mode, wherein the first running mode is a running mode in which the first camera is not allowed to operate in the second operating state, and the second running mode is a running mode in which the first camera is allowed to operate in the second operating state.

6. The method according to claim 5, wherein the detecting, by the terminal, whether there is an event triggering the first camera to operate in the first operating state comprises:
detecting, by the terminal, whether a user triggers recording of an image.

7. A terminal, comprising:
an operating parameter determining unit, configured to determine whether an operating parameter of the terminal meets a preset condition; and
a camera control unit, configured to: start a first camera and a second camera, wherein the first camera and the second camera are located on a same side of the terminal, and the first camera operates in a first operating state; and when the operating parameter determining unit determines that the operating parameter of the terminal meets the preset condition, switch the first camera from the first operating state to a second operating state, wherein the second operating state is a low power consumption state or a closed state.

8. The terminal according to claim 7, wherein the operating parameter comprises one or more of the following:
operating duration after the first camera is started;
a battery voltage of the terminal;
a photographing parameter of the first camera; or
a temperature of a preset area in the terminal; and
the preset condition comprises one or more of the following:
the operating duration after the first camera is started is greater than first preset duration;
the battery voltage of the terminal is lower than a preset voltage;
the photographing parameter of the first camera is higher than a first preset value, or the photographing parameter of the first camera is lower than a second preset value;
the temperature of the preset area in the terminal is higher than a first preset temperature; or
the temperature of the preset area in the terminal is lower than a second preset temperature; and the second preset temperature is lower than the first preset temperature.

9. The terminal according to any one of claim 7 to 8, wherein before switching the first camera from the first operating state to the second operating state, the camera control unit is further configured to: determine that the first camera is allowed to operate in the second operating state; and when the first camera is allowed to operate in the second operating state, switch the first camera from the first operating state to the second operating state.

10. The terminal according to any one of claims 7 to 9, wherein after switching the first camera from the first operating state to the second operating state, the camera control unit is further configured to:
detect whether there is an event triggering the first camera to operate in the first operating state; and
when the event triggering the first camera to operate in the first operating state is detected, switch the first camera from the operating state to the first operating state.

11. The terminal according to claim 10, wherein the detecting whether there is an event triggering the first camera to operate in the first operating state is:
detecting whether a running mode of a camera application program is switched from a second running mode to a first running mode, wherein the first running mode is a running mode in which the first camera is not allowed to operate in the second operating state, and the second running mode is a running mode in which the first camera is allowed to operate in the second operating state.

12. The terminal according to claim 10, wherein the detecting whether there is an event triggering the first camera to operate in the first operating state is:
detecting, by the terminal, whether a user triggers recording of an image.

13. A terminal, comprising:
a first camera and a second camera;
a memory, configured to store a program instruction; and
a processor, configured to execute the program instruction to perform the following steps:
starting the first camera and the second camera, wherein the first camera and the second camera are located on a same side of the terminal, and the first camera operates in a first operating state; and
when an operating parameter of the terminal meets a preset condition, switching the first camera from the first operating state to a second operating state, wherein the second operating state is a low power consumption state or a closed state.

14. The terminal according to claim 13, wherein the operating parameter comprises one or more of the following:
operating duration after the first camera is started;
a battery voltage of the terminal;
a photographing parameter of the first camera; or
a temperature of a preset area in the terminal; and
the preset condition comprises one or more of the following:
the operating duration after the first camera is started is greater than first preset duration;
the battery voltage of the terminal is lower than a preset voltage;
the photographing parameter of the first camera is higher than a first preset value, or the photographing parameter of the first camera is lower than a second preset value;
the temperature of the preset area in the terminal is higher than a first preset temperature; or
the temperature of the preset area in the terminal is lower than a second preset temperature; and the second preset temperature is lower than the first preset temperature.

15. The terminal according to any one of claims 13 to 14, wherein before the processor switches the first camera from the first operating state to the second operating state, the processor is further configured to:
determine that the first camera is allowed to operate in the second operating state.

16. The terminal according to any one of claims 13 to 15, wherein after the processor changes a current operating state of the first camera from the first operating state to the second operating state, the processor is further configured to:
detect whether there is an event triggering the first camera to operate in the first operating state; and
when the event triggering the first camera to operate in the first operating state is detected, switch the first camera from the operating state to the first operating state.

17. The terminal according to claim 16, wherein that the processor detects whether there is the event triggering the first camera to operate in the first operating state comprises:
detecting whether a running mode of a camera application program is switched from a second running mode to a first running mode, wherein the first running mode is a running mode corresponding to the first camera operating in the first operating state, and the second running mode is a running mode in which the first camera is allowed to operate in the second operating state.

18. The terminal according to claim 16, wherein the detecting, by the terminal, whether there is an event triggering the first camera to operate in the first operating state comprises:
detecting whether a user triggers recording of an image.
